# EUROPEAN PATENT SPECIFICATION

(11) **EP 2 075 084 B1**
(45) Date of publication and mention of the grant of the patent: **01.12.2010**
(21) Application number: 08021935.5
(22) Date of filing: 17.12.2008
(51) Int. Cl.: B23Q 1/00, B29C 45/00

(54) **A part-location link**
Teile-Auffindungsverknüpfung
Lien de localisation de pièce

(30) Priority: 27.12.2007 CN 200710307050
(43) Date of publication of application: 01.07.2009
(73) Proprietor: Byd Company Limited, Shenzhen 518118 (CN)
(72) Inventor: Chen, Qihan, Shenzhen 518118 (CN); Yuan, Feng, Shenzhen 518118 (CN); Wang, Jiajun, Shenzhen 518118 (CN)
(74) Representative: Zinnecker, Armin

(56) References cited:
- EP-A- 0 006 289
- EP-A- 0 255 042
- EP-A- 1 698 417
- JP-A- 7 276 445
- US-A- 6 160 236
- US-A1- 2004 140 223
- US-B1- 6 252 192

## Description

### RELATED APPLICATIONS

This application claims priority to Chinese Patent Application No. 200710307050.4, "A Part-Location Link," filed on December 26, 2007.

### FIELD OF THE INVENTION

The present invention is related to the mechanical field, in particular, to a part-location link that connects a jig to a machine's worktable.

### BACKGROUND OF THE INVENTION

A part needs to be held accurately and tightly onto a machine by a jig before any machining operation. Conventionally, the part to be machined is fixed in the machine position (*e*.*g*., on a worktable) of the machine by the jig. Specifically, an operator adjusts the part's position relative to the machine, especially relative to the cutting tool of the machine and then holds the part tightly by a holding means of the jig such that the part is located and clamped in position on the machine. These manual operations of mounting and holding the part on the machine via the jig not only affects the productivity because it takes time to mount the part onto the machine by the jig but also limits the precision of the part's location. Further, there are usually several steps in the machining process and the part needs to be reclamped in every step. The location benchmark of the part may change every time, so there might be low productivity and adverse effect on the machine precision.
EP-A- 0 255 042 discloses a part-location link according to the preamble part of claim 1.

With the development of the automation of the machining process, the conventional mounting and clamping step of parts to be machined no longer meets the requirement of enhancing productivity.

### SUMMARY

The present invention provides a low-cost, part-location link. The part-location link according to the invention locates and connects the jig holding a part to be machined onto the worktable of the machine.

In some embodiments, the part-location link is made of plastic materials by injection molding. As a result, the manufacture cost is reduced greatly. The injection molded part-location link has a higher size precision to replace the conventional part-location links made of metallic materials.

### BRIEF DESCRIPTION OF THE DRAWINGS

The aforementioned features and advantages of the invention as well as additional features and advantages thereof will be more clearly understood hereinafter as a result of a detailed description of embodiments and the attached drawings.

Figure 1 depicts a part-location link of the prior art.

Figure 2 depicts an exploded view of the part-location link in Figure 1 under working.

Figure 3 depicts a part-location link according to some embodiments of the invention.

Figure 4 depicts a side sectional view of the part-location link shown in Figure 3.

Figure 5 depicts a top view of the part-location link shown in Figure 3.

Like reference numerals refer to corresponding parts throughout the several views of the drawings.

### DESCRIPTION OF EMBODIMENTS

Reference will now be made in detail to embodiments, examples of which are illustrated in the accompanying drawings. In the following detailed description, numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

Accurately locating a part to a machine for further machining includes the following steps. First, the part to be machined is fixed on an individual jig to form a combination. Second, the jig of the combination operates with the machine's worktable in every step quickly. Therefore, location of the part in the machine can be realized by locating the jig in position. When the location precisions of the part to the jig and the jig onto the machine are obtained, the location precision of the part to the machine is ensured also because the location of the part relative to the machine is realized by the location of the jig relative to the machine. The jig can be fixed onto the worktable quickly by using standard parts such as location opening or location pin so as to save location time and improve productivity.

In addition, because the location of a part on the relevant machine is realized by locating the jig relative onto the machine in different steps, it is unnecessary to disassemble the part from the jig. When the part is fixed tightly to a jig to form a combination, the part can be machined repeatedly by different machines in different steps, and the location benchmark between the part and the jig will not change in many machining steps to substantially improve the machining precision of the part.

Therefore, the location and cooperation between the combination of the part and the jig and the worktable of the machine defines the machining precision of the part. In the quick process of mounting and clamping a part, a part-location link is usually used to ensure the accurate location between the jig and the machine's worktable.

While locating the jig holding a part to be machined onto the worktable, an terminal of the part-location link operates with the jig accurately and the other terminal operates with the worktable accurately so as to locate the jig onto the worktable accurately, then the combination of the part to be machined and the jig holding the part is held tightly. Usually, the link can separately cooperate with the jig and the worktable by using a location opening.

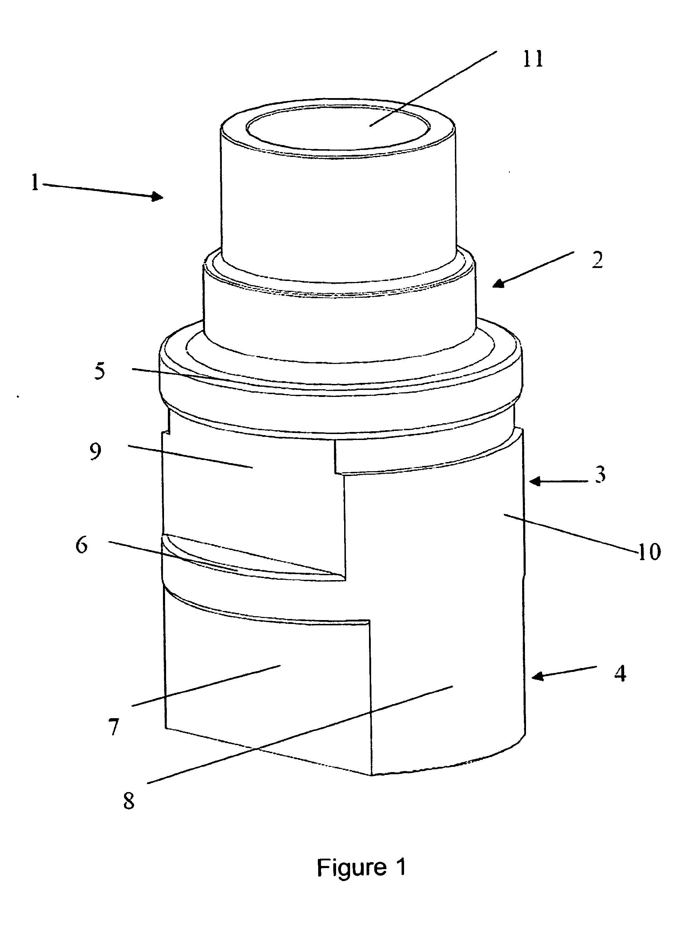

Figure 1 depicts the conventional structure of a part-location link. The part-location link 1 includes a first flange 5 and a second flange 6 that divide the part-location link into three sections, a first terminal 2, a second terminal 4 and a clamp section 3 between the first terminal 2 and the second terminal 4. The first terminal 2 is assembled to work with the machine's worktable, and the second terminal 4 is assembled to work with the jig, and the clamp section 3 is clamped by a robot to be located rapidly to realize a quick location. In order to use the robot easily, there is at least a pair of opposite-facing planes 9 that can be clamped by the robot and a rest circular surface 10 on the external circumference of the clamp section 3. There is a pair of opposite location planes 7 on the second terminal 4 used to locate the part-location link in the radial direction. Because of the requirement of higher locating precision, there is a pair of opposite circular surfaces 8 between the said pair of location planes 7.

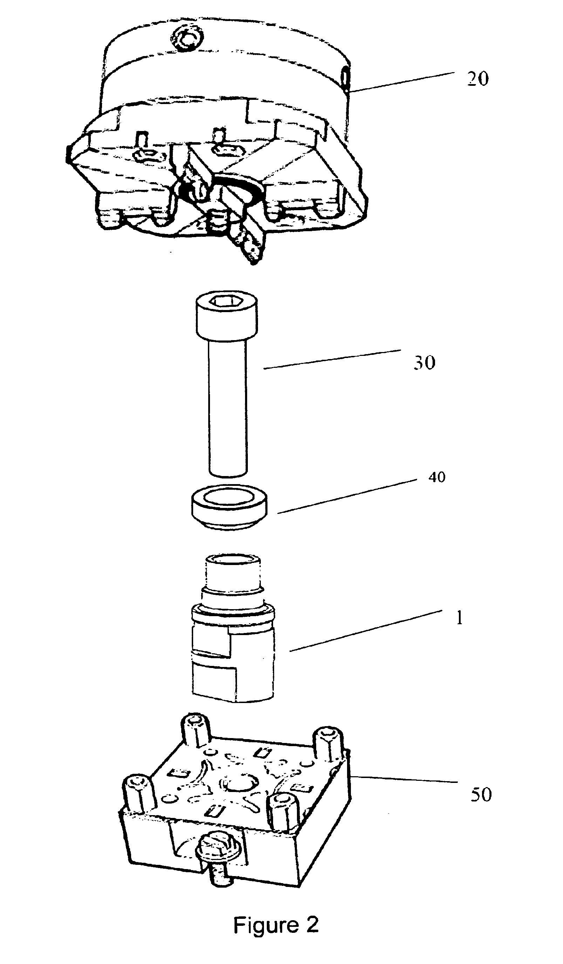

Figure 2 depicts the exploded view of the part-location link shown in Figure 1 under working. As shown in Figure 2, a chuck 20 is tightly fixed on the machine (not shown), and a jig 50 holding the part to be machined (not shown) that must be held in the jig 50 precisely. Before fixing the jig 50 holding the part into the chuck 20, a bolt 30, an O-shape ring 40, a part-location link 1 and the jig 50 should be assembled first. Specifically, the O-shape ring 40 is mounted to the first terminal 2 of the part-location link 1 at the step of the first terminal 2; the second terminal 4 of the part-location link 1 is located at a relative section of the jig 50 while maintaining the precise location of the part-location link 1 and the jig 50; then the bolt 30 passes through the central opening 11 of the part-location link I and operates with the threaded opening of the jig 50 so as to assemble the bolt 30, the O-shape ring 40, the part-location link I and the jig 50 and ensure the precise location of the link I relative to the jig 50. The part to be machined can be clamped by the jig 50 before or after assembling the bolt 30, the O-shape ring 40, the part-location link I and the jig 50. According to the steps above, the subassembly of the bolt 30, the O-shape ring 40, the part-location link I and the jig 50 holding the part to be machined is ready to be assembled on the worktable of the machine.

When the subassembly is mounted onto the worktable like the chuck 20 of the machine, the robot holds the two planes of the clamp section 3 of the part-location link 1, and inserts the subassembly onto the chuck 20. Then the chuck 20 holds the first terminal 2 of the part-location link I and the O-shape ring 40 to mount and clamp the subassembly onto the machine quickly.

The conventional part-location link 1 is made of metallic material like tool steel manufactured by mechanical machining such as turning, milling and grinding. There is a high requirement on the precision of the link since it is mainly used to locate the jig holding the part to be machined into the machine precisely, so the cost to manufacture the link increases.

Further, for adapting various parts and machines of different specifications, there are varieties of standards for the part-location link. Therefore, during the practical application, numerous part-location links are required. But because the conventional part-location links are made of metallic materials to achieve high precision, the manufacture cost of the part-location link increases greatly. In addition, a large number of part-location links are economically a heavy burden for a manufacturing enterprise.

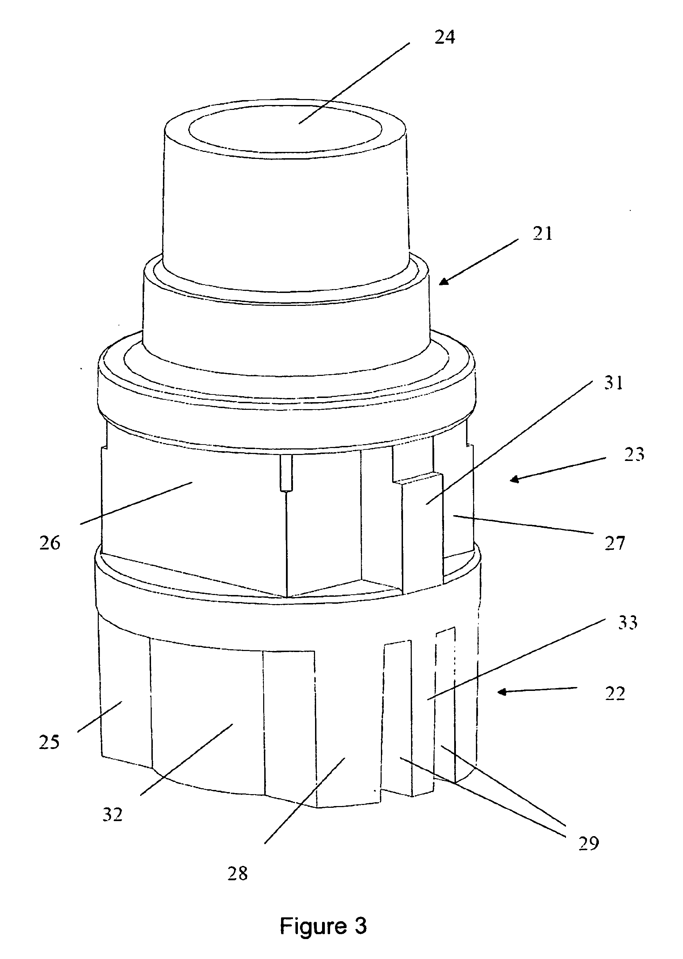

As shown in Figure 3, a part-location link according to some embodiments of the invention is used to locate and connect a jig (not shown in the figure) holding a part to be machined onto a worktable of a machine (not shown in the figure). The said part-location link is designed to be a one body including a first terminal 21, a second terminal 22, a clamp section 23 between the first terminal 21 and the second terminal 22, and a central opening 24 axially through the link, wherein, the said first terminal 21 is assembled to work with the said worktable of the machine with two opposite and parallel locating planes 25 arranged thereon, the said second terminal 22 is assembled to work with the jig, and the said clamp section 23 has at least two planes 26 extending in axial direction of the said part-location link so that the said part-location link can be clamped via the surface of the planes. The said part-location link is made of plastic materials by injection molding.

The cutting step may unavoidably cause a waste of materials during the course of machining metallic materials. On the contrary, there is no waste in the process of injection molding since the amount of the molded material is substantially equal to the required amount of the material before injection molding. Also, the machining process has multiple steps including a heat treatment step that requires high cost. But the injection molding can produce the required parts in one step in a relatively short cycletime and the parts so formed are of relatively high precision. Therefore, with the prerequisite of necessary location precision for practical use the part-location link provided by the invention can have lower cost than the conventional link.

For ensuring the sufficient mechanical strength of the injection molded part-location link, the part-location link can be made of plastic of high strength by means of precise injection. In some embodiments, the plastic is polyetherimide (PEI) or a composite of polycarbonate and glass fiber. For example, the glass fiber accounts for 10-30% of the total weight (*e*.*g*., 20%) of the composite.

According to the geometry of the part-location link, the injection molding used in the injection step can be designed by an ordinary technician in the field. Because the part-location link requires higher precision, the injection molding also requires higher precision such that the part-location link can provide a precise location.

In order to achieve enough location precision of the part-location link provided by the invention during the step of injection molding, the part-location link shown in Figure 3 has different structures from the conventional part-location link due to different forming steps.

As shown in Figure 3, the part-location link disclosed in the invention is formed to be one body including a first terminal 21, a second terminal 22, and a clamp section 23 between the first terminal 21 and the second terminal 22. The first terminal 21 is assembled to work with a machine's worktable such as the chuck 20 shown in Figure 2 of a machine. The second terminal 22 is assembled to work with the jig such as the jig 50 shown in Figure 2 that holds the part to be machined. The clamp section 23 is held by a robot so as to be mounted on the worktable of the machine.

The first terminal 21 is configured to operate with the machine. The structure of the first terminal 21 is similar to that of the conventional first terminal but for that the inner diameter of the first terminal 21 (the size of the central opening 24) is close to the lower limit of the tolerance and the outer diameter of the first terminal 21 is close to the upper limit of the tolerance such that the first terminal 21 has a relatively larger thickness to enhance the strength of the entire structure.

As shown in Figure 1, the clamp section 3 of the conventional part-location link 1 has at least a pair of planes 9 used to be clamped by the robot, and a circular surface 10 on its external circumference. The clamp planes 9 can be formed by milling.

As to the part-location link manufactured by injection molding, when the circular surface 10 is injection-molded, it is easy to cause defects like shrinkage deformation at the circular surface 10 due to its thickness, which may adversely affect the dimensional precision of the part-location link so molded. Therefore, it is preferred to injection-mold the surface of the clamp section 3 that are circular on the conventional part-location link to be plane. But the part-location link disclosed in the invention includes four consecutive planes 26 around the circumference of the clamp section 23. That is, there are four consecutive planes 26 around the circumference of the said clamp section 23. To keep the uniform distribution of the four planes, the four planes have the same size to maintain the size precision of the clamp section 23 during the injection molding.

To enhance the structural strength of the clamp section 23, a ridge 31 is configured to extend axially on a plane 27 of the four planes. During the course of injection molding, the position where the ridge 31 is formed in the injection mould serves as a channel for fluid material to improve the injection molding process and ensure the uniform distribution of the material during the injection molding.

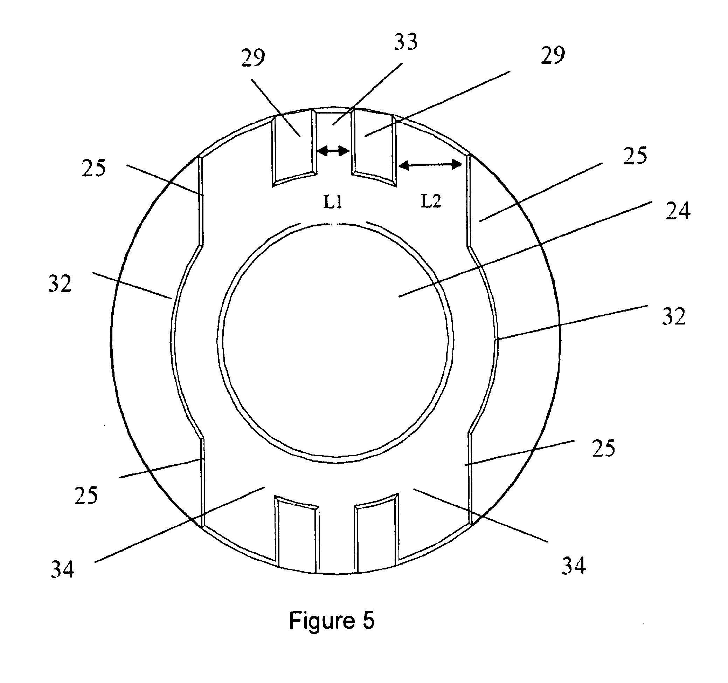

The second terminal 22 is different in structure from the second terminal 4 of the conventional part-location link because it has two locating planes 25 to work with the jig and locate the jig precisely onto the link, as shown in Figure 3 and Figure 5. The two planes 25 are opposite and parallel to each other.

Further, the second terminal includes a pair of circular surfaces 28 between the two locating planes 25 and a pair of slots 29 extending inwards and axially from the circular surfaces 28, a rib 33 being arranged between the slots 29. Specifically, the second terminal 28 has a pair of opposite-facing circular surfaces 28, on which there are a pair of slots axially extending away. Therefore, the second terminal 22 has four slots 29.

Because the link provided by the invention has location surfaces 25 of high precision, it has high location precision to meet practical needs. One reason to arrange the slots 29 at the circular surfaces 28 is that this configuration can effectively reduce the thickness at the surfaces 28 to avoid the defects of big shrinkage and deformation related to a large thickness so as to maintain high dimension and location precision of the locating planes 25 of the second terminal 22.

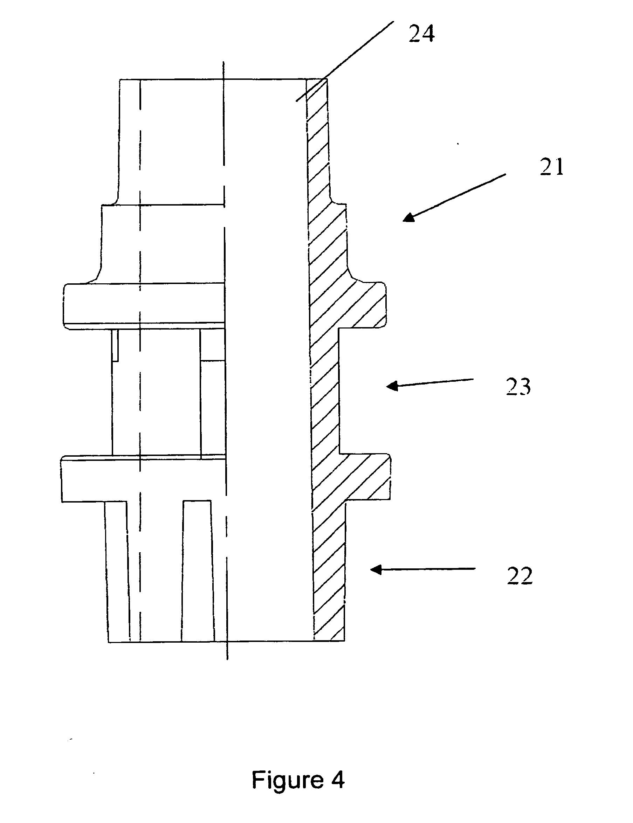

The part-location link according to the invention is structurally strong to connect the jig to the machine. In order to avoid disadvantage affect on the strength of the link, especially at the second terminal 22 due to the slots 29, a rib 33 is formed between each pair of slots 29, as shown in Figure 4 and Figure 5.

In some embodiments, the rib 33 is located in the middle of the two location planes 25 to improve the uniform distribution of the molding materials during the injection molding. Accordingly, the two planes 25 are symmetric relative to the ribs 33.

The size of the slots 29 is large enough to maintain the precision of the molding process by preventing the second terminal 22 from being too thick. Note that the size of the slots 29 is below a predefined limit such that the second terminal 22 is structurally strong. To have an ideal structure, the thickness of the rib 33 is set to be less than what is between the slot 29 and the closer locating plane 25. As shown in Figure 5, the rib 33 has a thickness of L1 and the space between the slot 29 and the closer locating plane 25 is L2, *i.e.,* L1<L2.

The locating planes 25 are flat surfaces extending axially along the link at the second terminal 22. Therefore, the closer the locating plane portion is to the central axes, which is the axes of the central opening 24, the less distance is between the portion and the surface of the central opening 24. In other words, the wall thickness, *i*.*e*., the thickness between a point on the locating plane 25 and the surface of the central opening 24, becomes smaller from the outmost to the inmost of the locating plane.

Note that the inconsistent thickness may adversely affect the uniformity of the plastic material shrinkage during injection molding, *e.g*., affecting the dimensional precision of the molded parts. In some embodiments, the projections 32 are arranged from the locating planes 25 at the second terminal 22. The projections 32 are configured to have equal distance from their outer surfaces to the surface of the central opening 24.

As shown in Figure 5, the outer surface of the projection 32 is coaxial with the central opening 24 to form a circular portion having an identical thickness, so as to improve the formation of this portion during injection molding and ensure high dimensional precision of the finished part.

Similarly, to obtain a uniform wall thickness at the second terminal, the distance between the bottom surface 34 of the slot 29 and the surface of the central opening 24 is set to be equal to the distance between the outer surface of the projection 32 and the surface of the central opening 24. That is, the bottom surface of the slot 29 and the outer surface of the projection 32 are located at the same cylindrical surface whose central axes is coaxial with the central axes of the part-location link.

The changes on the structure of the clamp section 23 and the second terminal 22 ensure that the part-location link has sufficient structural strength, while manufacturing the part-location link according to the invention by means of injection molding as beneficial as possible. So the part-location link meets the requirement of higher strength and higher locating precision.

According to the description above, the part-location link according to the invention has higher structural strength and higher locating precision. It is able to replace the conventional part-location link made of metallic material at a fraction of the manufacture cost because of plastic injection molding.

## Claims

1. A part-location link (1) for locating and connecting a jig (50) holding a part to be machined and a machine's worktable (20), comprising:
a first terminal (21) to work with said worktable (20);
a second terminal (22) to work with said jig (50), said second terminal (22) having two locating planes (25) that are arranged thereon and parallel to each other at opposite locations;
a clamp section (23) between the first terminal (21) and the second terminal (22), said clamp section (23) having at least two flat surfaces (26) extending axially along the link (1) to hold the link (1) via said flat surfaces (26); and
a central opening (24) through the link (1),
**characterized in that**:
the second terminal includes a pair of convex surfaces (28) between the two locating planes (25), multiple slots (29) extending axially from the pair of convex surface (28), and a rib (33) being set between each pair of the multiple slots (29).

2. The part-location link according to claim 1, wherein the part-location link (1) is made of plastic materials by injection molding.

3. The part-location link according to claim 2, wherein the plastic materials is polyetherimide or a composite material of polycarbonate and glass fiber.

4. The part-location link according to claim 3, wherein the glass fiber accounts for approximately 20% weight of the composite material.

5. The part-location link (1) according to anyone of claims 1 to 4, wherein the clamp section (23) includes four connective flat surfaces (26) peripherally along the part-location link (1) and of substantially the same size, and an axially extending strengthening ridge (31) being set on one of the surfaces (27).

6. The part-location link (1) according to anyone of claims 1 to 5, wherein the rib (33) is located in the middle of the pair of locating planes (25).

7. The part-location link (1) according to claim 6, wherein the rib (33) has a thickness (L1) less than the distance (L2) between the slots (29) and the locating planes (25) being closer to the slot (29).

8. The part-location link (1) according to anyone of claims 1 to 7, wherein the second terminal (22) further includes a projection (32) extending outwards from the pair of location planes (25), the projection (32) having an cylindrical surface that is of substantially equal distance to the surface of the central opening (24).

9. The part-location link (1) according to claim 8, wherein the distance between the bottom surface of the slot (29) and the surface of the central opening (24) is substantially equal to the distance between the outer surface of the projection (32) and the surface of the central opening (24).

## Patentansprüche

1. Verbindungselement (1) für Teile-Fixierung zum Fixieren und Verbinden einer Spannvorrichtung (50), die ein zu bearbeitendes Teil hält, und eines Arbeitstisches (20) einer Maschine, welches umfasst:
ein erstes Anschlussstück (21) zum Wirken mit dem Arbeitstisch (20);
ein zweites Anschlussstück (22) zum Wirken mit der Spannvorrichtung (50), wobei das zweite Anschlussstück (22) zwei Fixierungsebenen (25) aufweist, die darauf und parallel zueinander an entgegensetzten Stellen angeordnet sind;
einen Klemmabschnitt (23) zwischen dem ersten Anschlussstück (21) und dem zweiten Anschlussstück (22), wobei der Klemmabschnitt (23) mindestens zwei flache Flächen (26) aufweist, die sich axial entlang des Verbindungselements (1) erstrecken, um das Verbindungselement (1) mittels der flachen Flächen (26) zu halten; und
eine mittlere Öffnung (24) durch das Verbindungselement (1),
**dadurch gekennzeichnet, dass**:
das zweite Anschlussstück ein Paar konvexer Flächen (28) zwischen den beiden Fixierungsebenen (25), mehrere Schlitze (29), die sich axial von dem Paar konvexer Fläche (28) erstrecken, und eine Rippe (33), die zwischen jedes Paar der mehreren Schlitze (29) gesetzt ist, umfasst.

2. Verbindungselement für Teile-Fixierung nach Anspruch 1, **dadurch gekennzeichnet, dass** das Verbindungselement (1) für Teile-Fixierung durch Spritzguss aus Kunststoffmaterialien gefertigt ist.

3. Verbindungselement für Teile-Fixierung nach Anspruch 2, **dadurch gekennzeichnet, dass** die Kunststoffmaterialien Polyetherimid oder ein Verbundwerkstoff von Polycarbonat und Glasfaser ist.

4. Verbindungselement für Teile-Fixierung nach Anspruch 3, **dadurch gekennzeichnet, dass** die Glasfaser etwa 20 Gew.-% des Verbundmaterials ausmacht.

5. Verbindungselement (1) für Teile-Fixierung nach einem der Ansprüche 1 bis 4, **dadurch gekennzeichnet, dass** der Klemmabschnitt (23) vier verbindende flache Flächen (26) umlaufend entlang des Verbindungselements (1) für Teile-Fixierung und von im Wesentlichen gleicher Größe und einen axial verlaufenden Verstärkungsgrat (31), der auf eine der Flächen (27) gesetzt ist, umfasst.

6. Verbindungselement (1) für Teile-Fixierung nach einem der Ansprüche 1 bis 5, **dadurch gekennzeichnet, dass** die Rippe (33) sich in der Mitte des Paars von Fixierungsebenen (25) befindet.

7. Verbindungselement (1) für Teile-Fixierung nach Anspruch 6, **dadurch gekennzeichnet, dass** die Rippe (33) eine Dicke (L1) aufweist, die kleiner als der Abstand (L2) zwischen den Schlitzen (29) und den Fixierungsebenen (25) ist, die näher zu dem Schlitz (29) sind.

8. Verbindungselement (1) für Teile-Fixierung nach einem der Ansprüche 1 bis 7, **dadurch gekennzeichnet, dass** das zweite Anschlussstück (22) weiterhin einen Vorsprung (32) umfasst, der sich von dem Paar von Fixierungsebenen (25) nach außen erstreckt, wobei der Vorsprung (32) eine zylindrische Fläche aufweist, die im Wesentlichen zur Fläche der mittleren Öffnung (24) gleich weit entfernt ist.

9. Verbindungselement (1) für Teile-Fixierung nach Anspruch 8, **dadurch gekennzeichnet, dass** der Abstand zwischen der unteren Fläche des Schlitzes (29) und der Fläche der mittleren Öffnung (24) im Wesentlichen gleich dem Abstand zwischen der Außenfläche des Vorsprungs (32) und der Fläche der mittleren Öffnung (24) ist.

## Revendications

1. Lien de localisation de pièce (1) destiné à la localisation et à la fixation d'un gabarit (50) maintenant une pièce à usiner et une table de serrage de la machine (20), comprenant :
un premier terminal (21) destiné à fonctionner avec ladite table de serrage (20) ;
un second terminal (22) destiné à fonctionner avec ledit gabarit (50), ledit second terminal (22) ayant deux plans de localisation (25) qui sont disposés sur celui-ci et parallèlement l'un à l'autre à des emplacements opposés ;
une section à serrage (23) entre le premier terminal (21) et le second terminal (22), ladite section à serrage (23) ayant au moins deux surfaces plates (26) s'étendant axialement le long du lien (1) pour maintenir le lien (1) par l'intermédiaire de surfaces plates (26) ; et
un orifice central (24) à travers le lien (1),
**caractérisé en ce que** :
le second terminal comprend une paire de surfaces convexes (28) entre les deux plans de localisation (25), des fentes multiples (29) s'étendant axialement à partir de la paire de surfaces convexes (28), et une nervure (33) étant placée entre chaque paire des fentes multiples (29).

2. Lien de localisation de pièce selon la revendication 1, dans lequel le lien de localisation de pièce (1) est fabriqué en matières plastiques en moulage par injection.

3. Lien de localisation de pièce selon la revendication 2, dans lequel les matières plastiques sont du polyétherimide ou un matériau composite de polycarbonate et de fibre de verre.

4. Lien de localisation de pièce selon la revendication 3, dans lequel la fibre de verre comptabilise environ 20 % du poids du matériau composite.

5. Lien de localisation de pièce (1) selon une quelconque des revendications 1 à 4, dans lequel la section à serrage (23) comprend quatre surfaces plates de connexion (26) en périphérie le long du lien de localisation de pièce (1) et de taille pour beaucoup identique et une arête de renforcement s'étendant axialement (31) et étant fixée sur l'une des surfaces (27).

6. Lien de localisation de pièce (1) selon une quelconque des revendications 1 à 5, dans lequel la nervure (33) est située au centre des plans de localisation (25).

7. Lien de localisation de pièce (1) selon la revendication 6, dans lequel la nervure (33) a une épaisseur (L1) inférieure à la distance (L2) entre les fentes (29) et les plans de localisation (25) étant plus près de la fente (29).

8. Lien de localisation de pièce (1) selon une quelconque des revendications 1 à 7, dans lequel le second terminal (22) comprend par ailleurs une projection (32) s'étendant vers l'extérieur à partir de la paire de plans de localisation (25), la projection (32) ayant une surface cylindrique qui est de distance pour beaucoup égale à la surface de l'orifice central (24).

9. Lien de localisation de pièce (1) selon la revendication 8, dans lequel la distance entre la surface inférieure de la fente (29) et la surface de l'orifice central (24) est pour beaucoup égale à la distance entre la surface extérieure de la projection (32) et la surface de l'orifice central (24).
